# EUROPEAN PATENT APPLICATION

(11) **EP 1 736 929 A2**
(43) Date of publication of application: **27.12.2006**
(21) Application number: 06115964.6
(22) Date of filing: 23.06.2006
(51) Int. Cl.: G06T 7/20, H04N 7/26

(54) **Motion compensation error detection**

(30) Priority: 24.06.2005 KR 20050054903
(71) Applicant: Samsung Electronics Co., Ltd., Yeongtong-gu Suwon-city, Gyeonggi-do 442-742 (KR)
(72) Inventor: Seong, Hwa-seok, Gyeonggi-do (KR); Sohn, Young-wook, Gyeonggi-do (KR); Min, Jong-sul, Gyeonggi-do (KR); Kang, Jeong-woo, Gyeonggi-do (KR); Kim, Myung-jae, Seoul (KR)
(74) Representative: Walaski, Jan Filip

(57) **Abstract**

The present invention relates to a motion error detector comprising a motion estimator for dividing a current frame into a plurality of blocks having a predetermined size, and estimating a motion vector of a current block by comparing the current block among the plurality of blocks with a predetermined searching region set in a previous frame. A global motion estimator calculates a global motion vector on the basis of motion vectors of neighbouring blocks of the current block; and an error detector compares the motion vector of the current block and a corresponding motion estimation error for estimating motion with the global motion vector and a corresponding global motion estimation error, respectively, and determines whether the motion vector of the current block is erroneous. Thus, a motion error detector, a motion error compensator including the same, and a method for detecting and compensating a motion error using the motion error compensator is provided, in which a motion error of a current block is detected on the basis of a global motion, and the motion error is decreased by changing a compensation mode according to the number of detected errors.

## Description

The present invention relates to motion compensation error detection, particularly but not exclusively to a motion compensation error detector, a motion compensator including the same, and a method for detecting motion compensation errors and for performing motion compensation accordingly.

In a frame-rate converter or a de-interlacer, both of which use methods involving motion estimation and compensation, it is very important to detect correct motion vectors.

A method for detecting motion vectors is disclosed in WO 00/11863, entitled "problem area location in an image signal". In this method, an input picture is divided into covered/uncovered regions by obtaining an edge and a motion vector, and is processed by median filtering, thereby decreasing the side effects caused by motion error when motion compensation is performed.

In more detail, the conventional method emphasizes determining covered and uncovered regions in order to detect and correct the motion error in the covered regions. Basically, the covered/uncovered regions depend on and can therefore be determined by the motion vectors. For example, when a motion vector corresponding to a current block has a particular relationship with that of another block, for instance both motion vectors pointing towards each other, this can be determined to result in a covered region. On the other hand, a blank space resulting from the movement of the current block, that is not filled with another block, can be determined as an uncovered region.

Further, to more correctly detect the motion error, edge information is extracted from the input picture, and motion vectors for the edge are compared with each other, thereby determining the covered/uncovered regions. Then, using a 3-tap median filter for interpolation, the detected motion error blocks are selected to have an intermediate value among pixel values compensated with or without the motion vector.

For example, in the case of camera panning or global motion such as uniform motion or the like of a large object displayed on a screen, object blocks move in the same direction, so that most motion vectors are correctly compensated by applying neighbouring motion vectors and smoothing thereto. However, in the case of multi-motions, that is, in the case where there is a small object moving in a different direction from the global motion, the small object causes a motion error.

This motion error occurs when most neighbouring motion vectors belong to the global motion but a current block and its neighbouring block belong to the motion of a small object. In this case, when the current and some blocks correspond to the small object, they should represent the motion vector of the small object even though their neighbouring blocks belong to the global motion. Such a motion error can be detected a little by a full-searching method, but the motion error is smoothed with the neighbouring motion vector when preprocessed. Therefore, the motion of the small object may not be considered.

Further, the conventional motion compensation method uses a median interpolating method in the motion error blocks. However, such a median filter may obtain a bad result in the contour of an object.

Accordingly, there is a need for an improved motion error detector, motion error compensator, and method for detecting and compensating motion error using the motion error compensator.

Accordingly, it is an aspect of embodiments of the present invention to provide a motion error detector, a motion error compensator including the same, and a method for detecting and compensating a motion error using the motion error compensator, in which the motion error of a current block is detected on the basis of global motion, and the motion error is decreased in a compensation mode set according to the number of detected errors.

Additional aspects and/or advantages of exemplary embodiments of the invention will be set forth in part in the description which follows and, in part, will be obvious from the description, or may be learned by practice of the invention.

The foregoing and/or other aspects of exemplary embodiments of the present invention are achieved by providing a motion error detector comprising a motion estimator for dividing a current frame into a plurality of blocks having a predetermined size, and estimating a motion vector of a current block by comparing the current block among the plurality of blocks with a predetermined searching region set in a previous frame. A global motion estimator calculates a global motion vector on the basis of motion vectors of neighbouring blocks of the current block. An error detector compares the motion vector of the current block and a corresponding motion estimation error for estimating motion with the global motion vector and a corresponding global motion estimation error, respectively, and determines whether the motion vector of the current block is erroneous.

According to an aspect of exemplary embodiments of the present invention, the error detector determines that the motion vector of the current block is erroneous when a difference between the motion estimation error of the current block and the global motion estimation error is smaller than a predetermined value and a difference between the motion vector of the current block and the global motion vector is larger than a predetermined value.

According to an aspect of exemplary embodiments of the present invention, the error detector determines that the motion vector of the current block is erroneous when the motion estimation error of the current block is larger than the global motion estimation error by the predetermined value and difference between the motion vector of the current block and the global motion vector is larger than the predetermined value.

According to an aspect of exemplary embodiments of the present invention, the global motion vector includes a mean motion vector of the current block and the neighbouring blocks.

According to an aspect of exemplary embodiments of the present invention, the motion estimation error includes a sum of absolute difference (SAD).

According to an aspect of exemplary embodiments of the present invention, the global motion estimator calculates the global motion vector on the basis of a motion vector of a previous frame.

The foregoing and/or other aspects of exemplary embodiments of the present invention are achieved by providing a motion error compensator comprising a motion estimator for dividing a current frame into a plurality of blocks having a predetermined size, and estimating a motion vector of a current block by comparing the current block among the plurality of blocks with a predetermined searching region set in a previous frame. A global motion estimator calculates a global motion vector on the basis of motion vectors of neighbouring blocks of the current block. An error detector compares the motion vector of the current block and a corresponding motion estimation error for estimating motion with the global motion vector and a corresponding global motion estimation error, respectively, and determines whether the motion vector of the current block is erroneous. A mode determiner determines whether to select an error mode or not per a frame unit on the basis of the determined results of the error detector. A motion compensator generates an intermediate frame between the previous frame and the current frame by compensating an error of the motion vector according to the determined error mode.

According to an aspect of exemplary embodiments of the present invention, the error detector determines that the motion vector of the current block is erroneous when a difference between the motion estimation error of the current block and the global motion estimation error is smaller than a predetermined value and difference between the motion vector of the current block and the global motion vector is larger than a predetermined value.

According to an aspect of exemplary embodiments of the present invention, the error detector determines that the motion vector of the current block is erroneous when the motion estimation error of the current block is larger than the global motion estimation error by the predetermined value and a difference between the motion vector of the current block and the global motion vector is larger than the predetermined value.

According to an aspect of exemplary embodiments of the present invention, the mode determiner counts the number of errors in the motion vector of the current frame on the bases of the determined results of the error detector, and selects the error mode when the counted number of errors is larger than a first reference value.

According to an aspect of exemplary embodiments of the present invention, the mode determiner selects a first error mode when the counted number of errors in the motion vector is larger than the first reference value and smaller than a second reference value, and the motion compensator generates the intermediate frame based on either of the current frame or the previous frame in the first error mode.

According to an aspect of exemplary embodiments of the present invention, the motion compensator divides the motion vector of the current block according to timing positions of the intermediate frame, and generates the intermediate frame based on a frame corresponding to the smaller one of the divided motion vectors in the first error mode.

According to an aspect of exemplary embodiments of the present invention, the mode determiner selects a second error mode when the counted number of errors in the motion vector is larger than the second reference value, and the motion compensator compensates a final motion vector of the current block into 0 and generates the intermediate frame based on the final motion vector in the second error mode.

According to an aspect of exemplary embodiments of the present invention, the error detector determines that the motion vector of the current block is erroneous when a difference between the motion estimation error of the current block and the global motion estimation error is smaller than a predetermined value and a difference between the motion vector of the current block and the global motion vector is larger than a predetermined value.

According to an aspect of exemplary embodiments of the present invention, the global motion vector includes a mean motion vector of the current block and the neighbouring blocks.

According to an aspect of exemplary embodiments of the present invention, the global motion estimator calculates the global motion vector on the basis of a motion vector of a previous frame.

According to an aspect of exemplary embodiments of the present invention, the motion estimation error includes a sum of absolute difference (SAD).

The foregoing and/or other aspects of exemplary embodiments of the present invention are achieved by providing a method of detecting a motion error, comprising dividing a current frame into a plurality of blocks having a predetermined size, and estimating a motion vector of a current block by comparing the current block among the plurality of blocks with a predetermined searching region set in a previous frame. A global motion vector is calculated on the basis of motion vectors of neighbouring blocks of the current block. The motion vector of the current block and a corresponding motion estimation error are compared to estimate motion with the global motion vector and a corresponding global motion estimation error, respectively, and whether the motion vector of the current block is erroneous is determined.

According to an aspect of exemplary embodiments of the present invention, the motion vector of the current block is determined to be erroneous when a difference between the motion estimation error of the current block and the global motion estimation error is smaller than a predetermined value and difference between the motion vector of the current block and the global motion vector is larger than a predetermined value.

According to an aspect of exemplary embodiments of the present invention, the motion vector of the current block is determined as an error when the motion estimation error of the current block is larger than the global motion estimation error by a predetermined value and a difference between the motion vector of the current block and the global motion vector is larger than a predetermined value.

According to an aspect of exemplary embodiments of the present invention, the global motion vector is calculated on the basis of a motion vector of a previous frame.

The foregoing and/or other aspects of exemplary embodiments of the present invention are achieved by providing a method of compensating a motion error, comprising dividing a current frame into a plurality of blocks having a predetermined size, and estimating a motion vector of a current block by comparing the current block among the plurality of blocks with a predetermined searching region set in a previous frame. A global motion vector is calculated on the basis of motion vectors of neighbouring blocks of the current block. The motion vector of the current block and a corresponding motion estimation error are compared to estimate motion with the global motion vector and a corresponding global motion estimation error, respectively, and determine whether the motion vector of the current block is erroneous. The method includes determining whether to select an error mode or not per a frame unit on the basis of the determined results of the error detector. A motion is compensated by generating an intermediate frame between the previous frame and the current frame by compensating an error of the motion vector according to the determined error mode.

According to an aspect of exemplary embodiments of the present invention, the motion vector of the current block is determined as an error when a difference between the motion estimation error of the current block and the global motion estimation error is smaller than a predetermined value and a difference between the motion vector of the current block and the global motion vector is larger than a predetermined value.

According to an aspect of exemplary embodiments of the present invention, the motion vector of the current block is determined as an error when the motion estimation error of the current block is larger than the global motion estimation error by a predetermined value and a difference between the motion vector of the current block and the global motion vector is larger than a predetermined value.

According to an aspect of exemplary embodiments of the present invention, a first error mode is selected when the counted number of errors in the motion vector is larger than the first reference value and smaller than a second reference value when determining whether to select the error mode or not. Compensating for the motion comprises dividing the motion vector of the current block according to timing positions of the intermediate frame, and generating the intermediate frame based on a frame corresponding to the smaller one of the divided motion vectors in the first error mode.

According to an aspect of exemplary embodiments of the present invention, a second error mode is selected when the counted number of errors in the motion vector is larger than the second reference value when determining whether to select the error mode or not. Compensating for the motion comprises compensating a final motion vector of the current block into 0 and generating the intermediate frame based on the final motion vector in the second error mode.

According to an aspect of exemplary embodiments of the present invention, the global motion vector is calculated on the basis of a motion vector of a previous frame.

Embodiments of the invention will now be described, by way of example, with reference to the accompanying drawings, in which:
Figure 1 is a block diagram of a motion error detector and a motion error compensator comprising the same according to an embodiment of the present invention;
Figure 2 is a flowchart illustrating a method for detecting and compensating motion error according to an embodiment of the present invention;
Figure 3 is a table illustrating a method of determining a motion vector according to an embodiment of the present invention;
Figure 4 is a table illustrating a method of determining a motion error mode according to an embodiment of the present invention;
Figure 5 is a block diagram of a motion error compensator according to an embodiment of the present invention; and
Figure 6 is a block diagram of a first error mode compensator according to an embodiment of the present invention.

Throughout the drawings, like reference numbers will be understood to refer to like elements, features and structures.

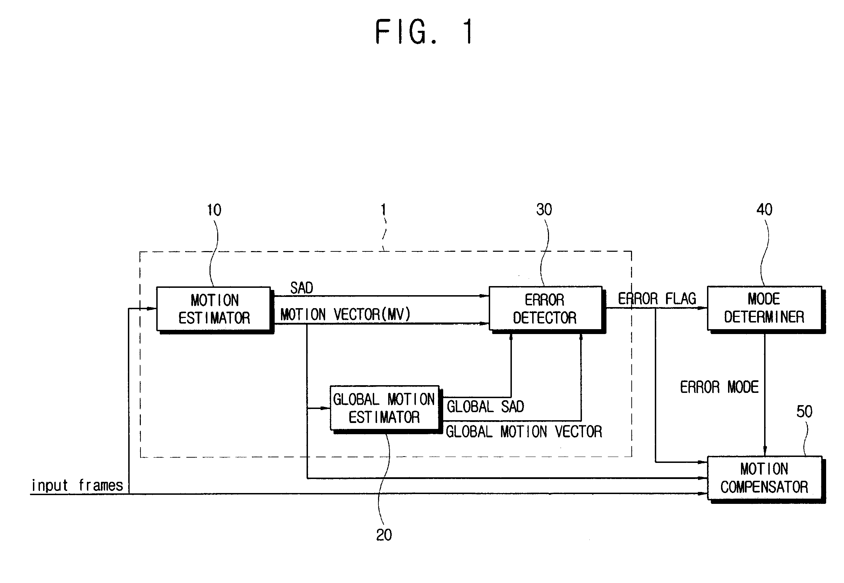

A motion error detector according to an exemplary embodiment of the present invention and a motion error detecting method using the same will be described with reference to Figures 1 to 3.

As shown in Figure 1, a motion error detector 1 according to an exemplary embodiment of the present invention includes a motion estimator 10, a global motion estimator 20, and an error detector 30.

The motion estimator 10 estimates a motion vector by comparing a previous frame with a current frame. The motion estimator 10 divides the current frame into a plurality of blocks, each having a predetermined size, and calculates a motion vector for each. The block for which motion is currently being estimated (hereinafter referred to as the "current block"), is analysed to produce the motion vector, and the motion vector is output along with a sum of absolute difference (SAD) for the motion estimation.

The motion estimator 10 estimates a motion vector for compensating for the motion of a block using a block matching algorithm (BMA). The BMA compares two frames for each block, thereby estimating one motion vector per block.

In more detail, the motion estimator 10 applies the BMA to each block, thereby estimating a plurality of SADs for each frame. In addition, the motion estimator 10 determines the motion vector corresponding to each block from a position having a SAD of the minimum motion estimation. Alternatively, the motion estimation can be obtained by various methods such as mean absolute difference (MAD). Also, the motion estimator 10 can perform the motion estimation several times so as to ensure that a correct and/or sufficiently accurate estimate of the motion vector is obtained.

The global motion estimator 20 calculates a global motion vector on the basis of the motion vector produced by the motion estimator 10. According to an exemplary embodiment of the present invention, the global motion vector is determined as the mean vector of motion vectors of neighbouring blocks adjacent to the current block. In other words, the global motion vector is obtained by calculating the mean vector of the motion vectors within an M×N-sized window including the current block.

For example, the window may have a size of 3×3. As the size of the window becomes larger, the whole motion can be more entirely reflected on the screen. Thus, the global motion of the whole screen can be obtained by averaging the whole screen, and global motion in a horizontal direction, such as moving letters or the like, can be determined by averaging one or more horizontal lines of blocks.

According to an exemplary embodiment of the present invention, the global motion vector is obtained by calculating the mean motion vector of a plurality of blocks, but the invention is not limited to this method. Alternatively, the global motion vector may be calculated by another representative value that can, for instance, reflect the motion of a predetermined sized window including the current block.

The global motion estimator 20 can obtain the global motion vector by accumulating blocks corresponding to a previous frame to decrease hardware components and calculating time. That is, to obtain the global motion vector, the motion vector of other blocks that come after the current block in the sequence of blocks may need to be found, which would delay the processing. Therefore, the motion vectors of the blocks corresponding to the previous frame, which have already been determined, are used to obtain the global motion vector.

Further, according to another exemplary embodiment of the present invention, the global motion estimator 20 can calculate a plurality of global motion vectors for the current block. For example, the global motion corresponding to the whole frame window and the global motion corresponding to a window smaller than whole frame window can be estimated, respectively. Among such obtained global motion vectors, a vector having the minimum SAD is preferably selected.

For instance, in a still picture background, when an object occupying about 1/3 of the whole screen moves, the motion vector obtained by using the whole screen as a window is not correct. On the other hand, the motion vector obtained by using a 5×5 window included within the corresponding object may be relatively correct. At this time, the SAD obtained by applying the motion vector using the whole screen may be larger in the corresponding object. However, the motion vector obtained by using the 5×5 window moves along the motion of the corresponding object, and thus the SAD for this vector can have a relatively small value.

In the case where camera panning has been used, the whole screen moves, so that the SADs based on the above two motion vectors are both small. That is, even though the global motion estimator 20 calculates the plurality of global motion vectors, the global motion vector corresponding to the minimum SAD is chosen regardless of whether the SADs are similar to or different from each other.

The error detector 30 compares the motion vector from the motion estimator 10 and the corresponding SAD with the global motion vector from the global motion estimator 20 and the corresponding global SAD, respectively, thereby detecting whether the motion vector of the current block includes an error.

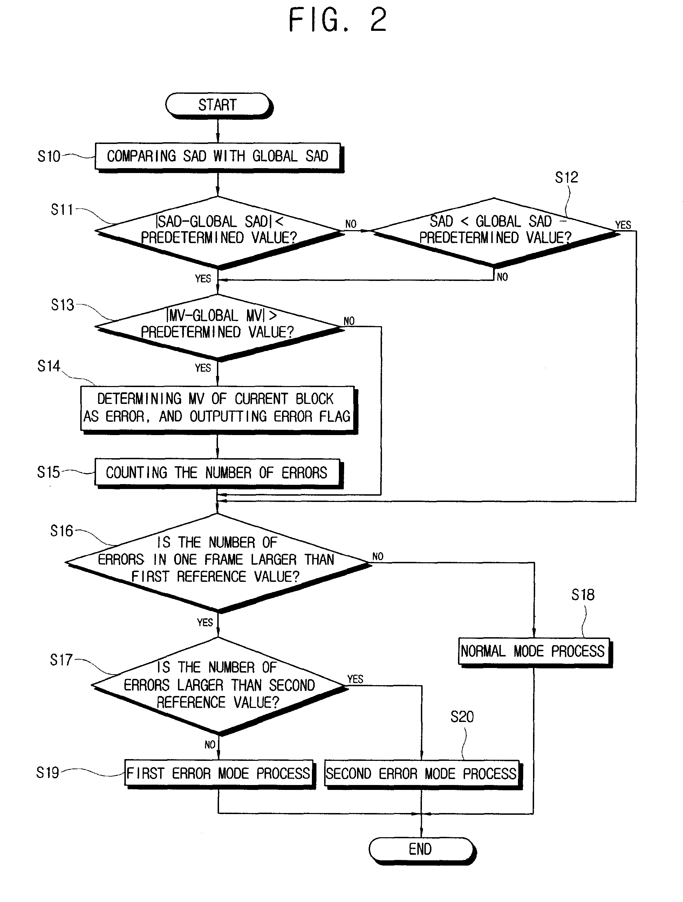

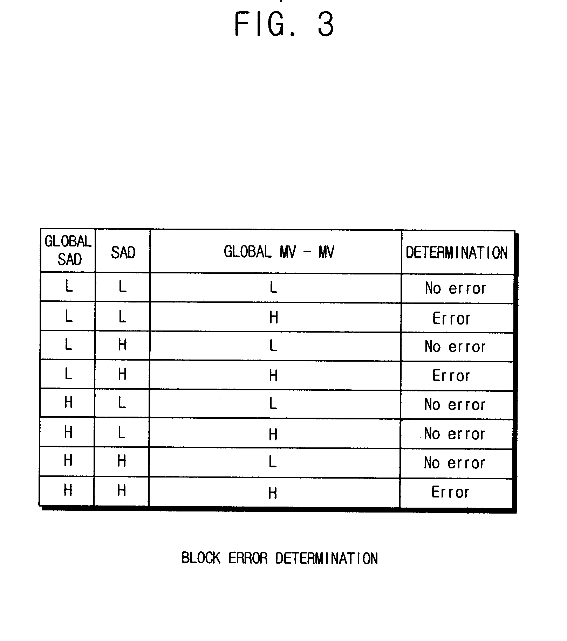

In more detail, the method performed by the error detector 30 in detecting motion errors will be described with reference to Figures 2 and 3.

At operation S10, the error detector 30 compares the SAD from the motion estimator 10 and the global SAD from the global motion estimator 20. At operation S11, the error detector 30 determines whether the difference between the SAD and the global SAD is smaller than a predetermined value. In the case where the difference between the SAD and the global SAD is smaller than a predetermined value, that is, when both the SAD and the global SAD are determined as high H or low L in a block error determination table of Figure 3, the error detector 30 then compares the two corresponding motion vectors (S13). The SAD being similar to the global SAD indicates, for instance, that there are two or more similar minima.

In order to determine whether the SAD and the global SAD are high (H) or low (L), they are compared with respective reference values. When the SAD and the global SAD are larger than the respective reference values, the SAD and the global SAD are determined as high (H). When the SAD and the global SAD are smaller than the respective reference values, the SAD and the global SAD are determined as low (L). Further, when both the SAD and the global SAD are determined as H or L, it is determined that a difference between the SAD and the global SAD is smaller than a predetermined value.

On the other hand, when the difference between the SAD and the global SAD is larger than a predetermined value, at operation S12, it is determined whether the SAD is smaller than the global SAD by a predetermined value or more. When the SAD is smaller than the global SAD by a predetermined value or more, the motion vector of the current block is not determined as being erroneous. In this case, the motion vector of the current vector can be used as it is.

However, where the SAD is larger than the global SAD, the error detector 30 compares the corresponding two motion vectors and determines whether the difference between the motion vector and the global motion vector of the current block is larger than a predetermined value (S13). When the two motion vectors are similar to each other, that is, when the difference between the motion vector and the global motion vector of the current block is determined as low referring to the table of Figure 3, the choice of motion vector would not significantly affect the motion vector value , and therefore the motion vector of the current block is not determined as being erroneous.

However, when the difference between the two motion vectors is larger than a predetermined value, that is, when the difference between the motion vector and the global motion vector of the current block is determined as high referring to the table of Figure 3, at operation S14 the motion vector of the current block is determined as being erroneous because it is impossible to know which motion vector is to be chosen.

According to an exemplary embodiment of the present invention, in the method of detecting the motion error, the foregoing determination reference is applied to the difference between the motion vectors, so that it is determined whether the current block should be processed as the motion error. Thus, the existing motion vector and the SAD are compared with the separately accumulated values, so that it is determined whether the motion vector of the corresponding block includes an error or not without largely changing the existing motion estimating method.

In the meantime, a motion error compensator and a compensating method using the same according to another embodiment of the present invention will be described with reference to Figures 1 through 6. Hereinafter, repetitive descriptions to the foregoing embodiment will be omitted in the interest of clarity and conciseness.

As shown in Figure 1, a motion error compensator according to an exemplary embodiment of the present invention includes a motion estimator 10, a global motion estimator 20, an error detector 30, a mode determiner 40, and a motion compensator 50. Here, the motion estimator 10, the global motion estimator 20 and the error detector 30 are substantially the same as described above.

At operation S14, the error detector 30 detects a motion error, and outputs a 1-bit flag associated with the current block unit to the mode determiner 40.

At operation S15, the mode determiner 40 counts the number of motion errors corresponding to the present frame, and determines an error mode accordingly. The determined error mode influences how the motion error of the frame will be processed.

The mode determiner 40 determines the error mode of each frame on the basis of the number of counted errors, referring to a first reference value and a second reference value. The second reference value is, for instance, larger than the first reference value. At operations S16 and S17, the mode determiner 40 determines whether the number of motion errors corresponding to the whole one-frame is larger than the first and/or second reference values. When the number of motion errors is smaller than the first reference value, at operation S18 it is determined as a normal mode. When the number of motion errors is larger than the first reference value and smaller than the second reference value, at operation S19 it is determined as a first error mode. Further, when the number of motion errors is larger than the second reference value and larger than the first reference value, at operation S20 a second error mode is selected.

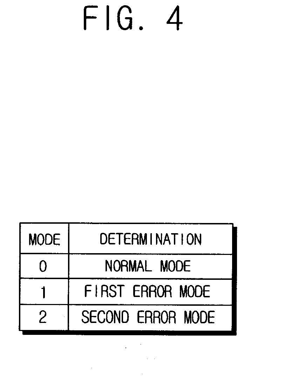

As shown in Figure 4, a mode value determined by the mode determiner 40 is output to the motion compensator 50, in which the mode value is one of '0', '1' and '2'. For example, the normal mode has a mode value of '0', the first error mode has a mode value of '1', and the second error mode has a mode value of '2'.

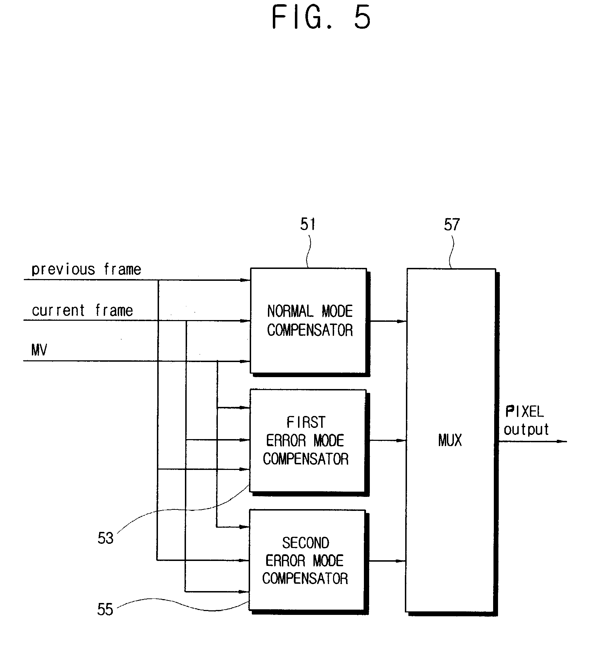

Figure 5 is a block diagram illustrating the compensating method of the motion compensator 50 according to the determined results of the mode determiner 40.

As shown in Figure 5, the motion compensator 50 includes a normal mode compensator 51 receiving and processing a previous frame, a current frame and a motion vector in the normal mode; a first error mode compensator 53 receiving and processing the previous frame, the current frame and the motion vector in the first error mode; a second error mode compensator 55 receiving and processing the previous frame, the current frame and the motion vector in the second error mode; and a multiplexer (MUX) 57 selectively outputting compensated intermediate frame data output from the three compensators 51, 53 and 55 on the basis of an error flag of the error detector 30 and the mode value of the mode determiner 40.

The normal mode compensator 51 compensates motion using an existing method and generates the intermediate frame data. For example, when the motion vector is obtained as 'A', the motion vector is divided into offsets for the previous frame and the current frame according to timing positions of an intermediate frame to be newly inserted. That is, when the intermediate frame should be inserted in a timing position of 1:2 between the previous frame and the current frame, the motion vector is divided to indicate data corresponding to an 'A/3' position from the previous frame and data corresponding to a '2*A/3' position from the current frame. Here, the motion vector to be used in the previous frame will be called 'MV1', and the motion vector to be used in the current frame will be called 'MV2'. Thus, the motion compensating value averages pixel data corresponding to the previous frame and the current frame as determined by MV1 and MV2.

The first error mode compensator 53 generates the intermediate frame data based on the first error mode. Here, the first error mode is used when the number of motion errors is relatively small. In the first error mode, the intermediate frame is generated on the basis either of previous frame data or current frame data.

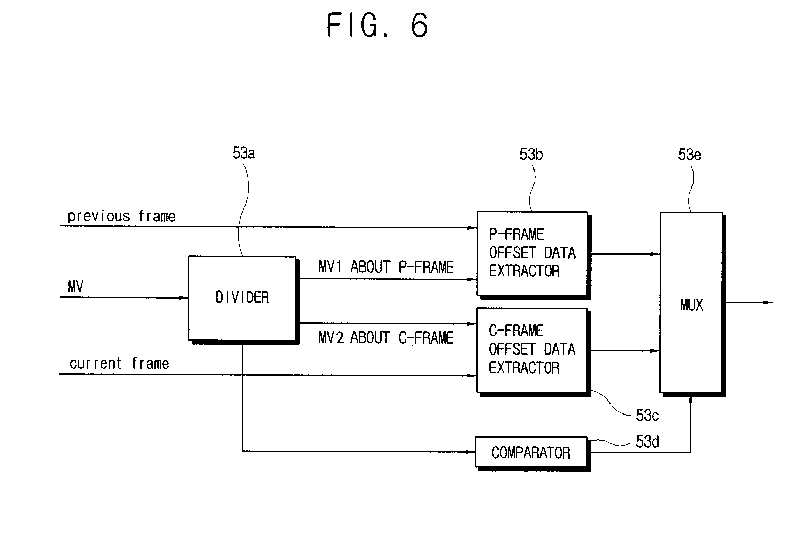

In more detail, the error compensating method of the first error mode compensator 53 will be described with reference to Figure 6.

As shown in Figure 6, the first error mode compensator 53 includes a divider 53a for dividing the motion vector according to the timing positions of the intermediate frame; a previous frame offset data extractor 53b for compensating the previous frame data determined by the divided MV1; and a current frame offset data extractor 53c for compensating the current frame data determined by the divided MV2.

Further, the first error mode compensator 53 includes a comparator 53d for comparing the divided motion vectors MV1 and MV2; and a multiplexer 53e for selectively outputting the previous frame offset data or the current frame offset data corresponding to the smallest out of MV1 and MV2 on the basis of the compared results.

Meanwhile, the second error mode compensator 55 generates the intermediate frame data based on the second error mode. The second error mode is used when the number of motion errors is relatively high. In the second error mode, the data corresponding to the previous frame and the current frame is pixel-averaged, with the motion vector as '0'.

The conventional motion error processing method generally uses the second error mode compensating method regarding the motion vector as '0', which causes a motion blur phenomenon. Therefore, according to an exemplary embodiment of the present invention, the second error mode is used only when the number of motion errors is relatively high, and the first error mode performs a compensating method based on one-frame data when the number of motion error is not relatively high. Thus, the first error mode can decrease the motion blur phenomenon.

The multiplexer 57 selectively outputs the compensated intermediate frame data from the foregoing three mode compensators on the basis of the error flag of the error detector 30 and the mode value of the mode determiner. Therefore, the error block is compensated differently according to the determined modes. That is, the compensating method is varied according to modes of the whole frame and whether the current block is the error block.

Here, application of the error block compensating method based on the determined mode begins at the following frame to minimize processing delay.

According to another exemplary embodiment of the present invention, the motion error is detected and compensated by the foregoing methods, so that the motion error occurring in the motion estimation is visually smoothed. Further, the foregoing methods can be used for decreasing the motion error in the covered/uncovered regions generated by a frame rate converter or a de-interlacer, which can be realized by adding some processing blocks to the existing method without increasing hardware components.

In this embodiment, the motion vector of the current block is used in the motion compensating method, but the invention is not limited thereto. For example, alternatively, the motion can be compensated by selecting the global motion vector.

As described above, embodiments of the present invention provide a motion error detector, a motion error compensator including the same, and a method for detecting and compensating motion error using the motion error compensator, in which a motion error of a current block is detected on the basis of a global motion, and the motion error is decreased by changing a compensation mode according to the number of detected errors.

Although exemplary embodiments of the present invention have been shown and described, it will be appreciated by those skilled in the art that changes may be made in these embodiments without departing from the principles of the invention, the scope of which is defined in the appended claims.

## Claims

1. A motion compensation error detector comprising:
means (10) for determining a block motion vector for a block of pixels in a frame;
means (20) for determining a global motion vector for a group of blocks of pixels;
means (30) for comparing the block motion vector and the global motion vector, and for comparing motion estimation errors associated with the block motion vector and the global motion vector; and
means (30) for determining whether the block motion vector is erroneous on the basis of at least one of the comparisons.

2. A motion compensation error detector according to claim 1, wherein: the block motion vector determining means comprises a motion estimator for dividing a current frame into a plurality of blocks having a predetermined size, and for estimating the block motion vector by comparing a current block of the plurality of blocks with a predetermined searching region set in a previous frame; a global motion estimator for calculating the global motion vector on the basis of motion vectors of neighbouring blocks of the current block; and the comparing means comprises an error detector.

3. A motion compensation error detector according to claim 2, wherein the error detector determines that the block motion vector of the current block is erroneous when a difference between the motion estimation error of the current block and the global motion estimation error is smaller than a predetermined value and difference between the block motion vector of the current block and the global motion vector is larger than a predetermined value.

4. A motion compensation error detector according to claim 2 or 3, wherein the error detector determines that the block motion vector of the current block is erroneous when the motion estimation error of the current block is larger than the global motion estimation error by the predetermined value and difference between the block motion vector of the current block and the global motion vector is larger than the predetermined value.

5. A motion compensation error detector according to claim 2, 3 or 4, wherein the global motion vector is determined using the mean block motion vector of the current block and the neighbouring blocks.

6. A motion compensation error detector according to any one of claims 2 to 5, wherein the motion estimation error comprises a sum of absolute difference (SAD).

7. A motion compensation error detector according to claim any one of claims 2 to 6, wherein the global motion estimator calculates the global motion vector on the basis of at least one motion vector associated with a previous frame.

8. A motion compensating apparatus comprising:
a motion compensation error detector according to any one of the preceding claims;
a mode determiner for selecting one of a plurality of error modes for each of a plurality of frames on the basis of the determined results of the error detector; and
a motion compensator for generating an intermediate frame for insertion between the previous frame and the current frame that compensates an error of the motion vector according to the selected error mode.

9. A motion compensator according to claim 8, wherein the mode determiner counts the number of errors in the block motion vectors of the current frame on the basis of the determined results of the error detector, and selects the error mode when the counted number of errors is larger than a first reference value.

10. A motion compensator according to claim 9, wherein the mode determiner selects a first error mode when the counted number of errors in the motion vector is larger than the first reference value and smaller than a second reference value, and
the motion compensator generates the intermediate frame based on either of the current frame or the previous frame in the first error mode.

11. A motion compensator according to claim 10, wherein the motion compensator divides the motion vector of the current block according to timing positions of the intermediate frame, and generates the intermediate frame based on a frame corresponding to the smaller of the divided motion vectors in the first error mode.

12. A motion compensator according to claim 9, 10 or 11, wherein the mode determiner selects a second error mode when the counted number of errors in the motion vector is larger than the second reference value, and
the motion compensator compensates a final motion vector of the current block into zero and generates the intermediate frame based on the final motion vector in the second error mode.

13. A method of determining motion error, comprising:
determining a block motion vector for a block of pixels in a frame;
determining a global motion vector for a group of blocks of pixels;
comparing the block motion vector and the global motion vector, and for comparing motion estimation errors associated with the block motion vector and the global motion vector; and
determining whether the block motion vector is erroneous on the basis of at least one of the comparisons.

14. A method according to claim 13, further comprising dividing a current frame into a plurality of blocks having a predetermined size, wherein:
the step of determining a block motion vector comprises estimating a motion vector of a current block by comparing the current block of the plurality of blocks with a predetermined searching region set in a previous frame;
the step of determining a global motion vector comprises calculating a global motion vector on the basis of motion vectors of neighbouring blocks of the current block.

15. A method according to claim 14, wherein the motion vector of the current block is determined as erroneous when a difference between the motion estimation error of the current block and the global motion estimation error is smaller than a predetermined value and a difference between the motion vector of the current block and the global motion vector is larger than a predetermined value.

16. A method according to claim 14 or 15, wherein the motion vector of the current block is determined as an error when the motion estimation error of the current block is larger than the global motion estimation error by a predetermined value and a difference between the motion vector of the current block and the global motion vector is larger than a predetermined value.

17. A method according to claim 14, 15 or 16, wherein the global motion vector is calculated on the basis of a motion vector of a previous frame.

18. A method of motion compensation, comprising:
determining motion error in a method according to any one of claims 13 to 17;
selecting an error mode from a plurality of error modes for each of a plurality of frames on the basis of the determined motion error; and
performing motion compensation by generating an intermediate frame between the previous frame and the current frame that compensates an error of the motion vector in a manner according to the selected error mode.

19. A method according to claim 18, wherein a first error mode is selected when the counted number of errors in the motion vectors is larger than a first reference value and smaller than a second reference value, and
the motion compensation step comprises dividing the motion vector of the current block according to timing positions of the intermediate frame, and generating the intermediate frame based on a frame corresponding to the smaller of the divided motion vectors in the first error mode.

20. A method according to claim 18 or 19, wherein a second error mode is selected when the counted number of errors in the motion vector is larger than the second reference value, and
the motion compensation step comprises compensating a final motion vector of the current block into zero and generating the intermediate frame based on the final motion vector in the second error mode.
